# FASCICULE DE BREVET EUROPEEN

(11) **EP 1 418 801 B1**
(45) Date de publication et mention de la délivrance du brevet: **23.07.2008**
(21) Numéro de dépôt: 02727061.0
(22) Date de dépôt: 28.05.2002
(51) Int. Cl.: A01G 3/04

(54) **SYSTEME DE TAILLE-HAIE AUTOMATIQUE**
SELBSTTÄTIGE HECKENSCHNEIDVORRICHTUNG
AUTOMATIC HEDGE-TRIMMING SYSTEM

(30) Priorité: 28.05.2001 BE 200100362
(43) Date de publication de la demande: 19.05.2004
(73) Titulaire: Solar & Robotics S.A., B-1050 Bruxelles (BE)
(72) Inventeur: COLENS, André, B-1330 Rixensart (BE)
(74) Mandataire: Colens, Alain M.G.M.
(86) Numéro de dépôt international: PCT/BE2002/000087
(87) Numéro de publication internationale: WO 2002/096186

(56) Documents cités:
- DE-A- 2 848 372
- DE-A- 3 024 806
- DE-C- 4 409 126
- FR-A- 2 645 700
- FR-A- 2 680 444
- US-A- 5 323 593
- US-A- 5 444 965
- US-A- 5 507 137

## Description

La présente invention concerne un procédé et un dispositif pour l'entretien d'un arbuste, d'un groupe d'arbustes et plus particulièrement d'une haie, ou plus généralement de tout volume ou surface végétal pouvant être l'objet d'une coupe ou taille régulière.

Plus spécifiquement, l'entretien d'une haie présente quatre problèmes principaux :
1. La taille d'une haie est une tâche fastidieuse et répétitive.
2. Un bon résultat demande une grande attention et dextérité de la part de l'opérateur de manière à éviter des ondulations peu esthétiques.
3. La taille produit une quantité de déchets, souvent pénible à éliminer.
4. L'opération de taille est dangereuse et représente statistiquement un des taux d'accidents ménagers les plus élevés.

L'automatisation de l'entretien d'une haie a fait l'objet de quelques documents de brevet proposant des dispositifs d'aide à une opération de taille par ailleurs classique, c'est à dire ponctuelle et nécessitant l'intervention humains. Ces solutions ne sont pas avérées satisfaisantes.

Ainsi, le document de brevet DE 3024806 A1 concerne un dispositif pour tailler une haie sur un ou, simultanément sur deux ou trois de ses côtés, à l'aide d'un dispositif se déplacant sur un rail et comportant des organes de coupe classiques pour un taille-haie. L'opération de taille est elle-même classique en ce qu'elle est ponctuelle et comporte la collecte des débris coupés. Le moteur associé au système est destiné à l'organe de coupe constitué d'un mouvement de va et vient de lames et contre-lames. Un dispositif analogue est décrit dans le document DE 2848372 A1.

Le but de la présente invention est d'apporter une solution aux différents problèmes susmentionnés.

Selon un premier mode de réalisation de l'invention, on propose un dispositif de taille ou d'entretien pour une haie comprenant un portique roulant sur un rail placé au sommet de la haie sur toute sa longueur.

Le portique se déplace régulièrement sur le rail, parallèlement à la haie. La forme du portique, plus précisément son profil transversal définit le profil que l'on veut donner à la haie en coupe transversale.

Les arêtes supérieures et/ou transversales du portique sont de préférences munies d'un dispositif tranchant ou abrasif.

Le passage régulier du portique détruit les extrémités de pousse orientées vers l'extérieur et donc empêche la haie de se développer vers l'extérieur.

Le mouvement régulier du portique le long de la haie empêche en effet par simple effet mécanique les pousses extérieures de se développer, comme c'est le cas le long d'une piste dans une végétation touffue, piste qui serait entretenue par le passage régulier d'un ou de plusieurs animaux.

D'autres dispositifs pourraient être prévus sur le portique pour produire le même résultat c'est à dire une coupe, un effet abrasif ou une inhibition de croissance des pousses (fil chauffé, produit chimique, décharge électrique...). Un fil ou une mini-chaîne dentée, apte à défiler comme dans une tronconneuse classique, de manière continue ou par impulsions, peut également être envisagé en adaptant le portique à cet effet.

Selon une variante, les arêtes du portique présentent des lames pouvant agir par effet de cisaillement, ce qui suppose un mécanisme de déplacement en va et vient continu ou par impulsions d'une lame par rapport à une contre-lame. Le système peut être rendu inoffensif dans la mesure ou la coupe est destinée à agir sur des pousses de dimensions très réduites. Les parties exposées des lames ou des dents peuvent être de dimension réduite.

Avantageusement, la coupe par effet de cisaillement peut n'être enclenchée que lorsque le système sent une résistance à l'avancement dudit portique, résistance due à la présence d'une pousse ou d'une petite branche. Ce dernier dispositif peut fonctionner de manière électromécanique ou en prévoyant un circuit électronique adéquat.

Dans le premier cas, à titre d'exemple, lorsque le dispositif rencontre une résistance à l'avancement due à une pousse ou une branche relativement résistante, l'énergie peut s'accumuler, par exemple dans un ressort, qui au delà d'une certaine tension se détend et déclenche un mouvement brusque d'une lame par rapport à une contre-lame.

Dans le cas d'un déclenchement électronique, lorsqu'une résistance est ressentie par le dispositif une capacité peut se charger pour, au delà d'un certain seuil prédéterminé, se décharger en fournissant l'énergie nécessaire au mouvement de cisaillement. Le cycle peut alors être avantageusement géré par un microprocesseur, prenant éventuellement en compte d'autres paramètres.

Selon un mode de réalisation, le portique est entraîné par un galet monté sur un motoréducteur électrique de faible puissance (de l'ordre de quelques watts). Un petit panneau solaire fixé au portique mobile permet éventuellement d'alimenter le moteur.

Alternativement le moteur peut être alimenté par une petite batterie intégrée au portique, par exemple 6V - 0,5Ah, qui peut se recharger automatiquement par contact avec une borne de charge fixe placée à une extrémité du rail, borne éventuellement alimentée elle-même par des cellules photovoltaïques.

Selon encore un autre mode de réalisation, si l'environnement le permet, la source d'énergie est tout simplement une alimentation électrique classique du réseau.

Selon un mode de réalisation, le fonctionnement du dispositif est très simple. Le portique muni d'un panneau solaire se déplace lentement d'un bout à l'autre du rail. Arrivé en bout de course un inverseur change le sens de rotation du moteur d'entraînement et le portique repart dans l'autre sens. Le portique se meut continuellement lorsque suffisamment de lumière éclaire le panneau solaire.

Dans le cas du système à batterie, lorsque le portique arrive en bout de course du côté où se trouve le chargeur, une temporisation permet éventuellement à la batterie de se recharger avant que le portique ne reprenne sa course dans l'autre sens.

Un moteur fixe situé par exemple à une extrémité de la haie peut également servir de source d'entraînement, en tirant dans un sens puis dans l'autre un câble adéquat attaché audit portique.

Le dispositif décrit résout les quatre problèmes identifiés ci-dessous:
1. Il élimine la nécessité de tailler régulièrement la haie.
2. Il donne à la haie une forme parfaitement régulière, fixée longitudinalement par le rail fixe et transversalement par le portique mobile.
3. Le système automatique ne produit pas de déchets.
4. Le dispositif est extrêmement sûr, utilisant de très petites puissances et aucun élément dangereux.

La vitesse de déplacement peut varier par exemple selon le type de volume végétal à contrôler, le va-et-vient pouvant se produire, par exemple, à des intervalles de quelques fois par jour à quelques dizaines de fois par jour.

Selon un mode de réalisation, le rail est installé au dessus et sur toute la longueur de la haie qui peut comprendre des courbes et des tournants. Le rail peut être maintenu par des piquets placé à distance régulière.

Alternativement, toujours selon l'invention, l'élément mobile faisant office de portique peut se déplacer sur des rails fixés au sol d'un seul ou des deux côtés de la haie, l'élément mobile empêchant la croissance de la haie d'un ou des deux côtés selon sa configuration.

La motorisation peut donc être prévue au sol, l'engin supportant le profil se déplacant le long d'un rail. Les variantes d'alimentation exposée pour un rail aérien sont facilement transposables à un rail terrestre.

On notera que de manière actuellement moins préférentielle, le portique peut aussi se déplacer le long d'un ou de plusieurs fils tendus, la technique de mise en mouvement pouvant par exemple s'apparenter à la technologie des téléphériques (fil porteur, fil tracteur).

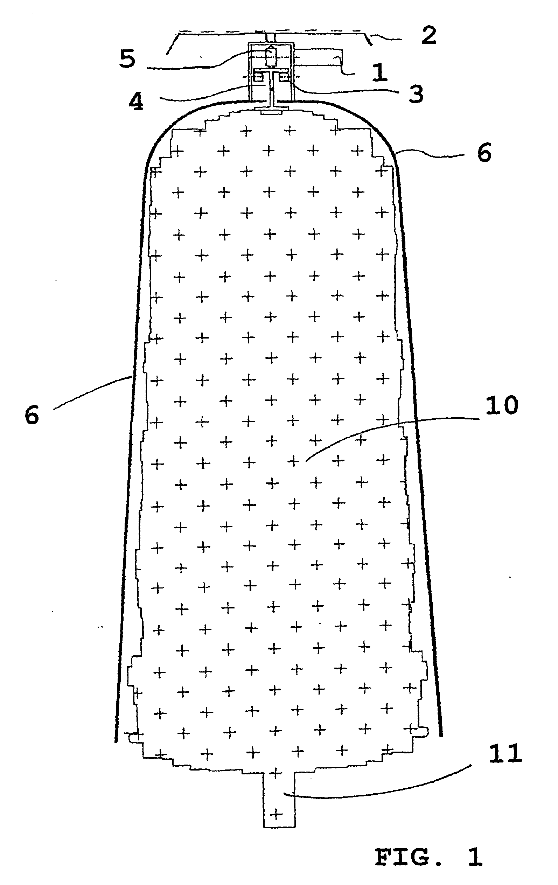

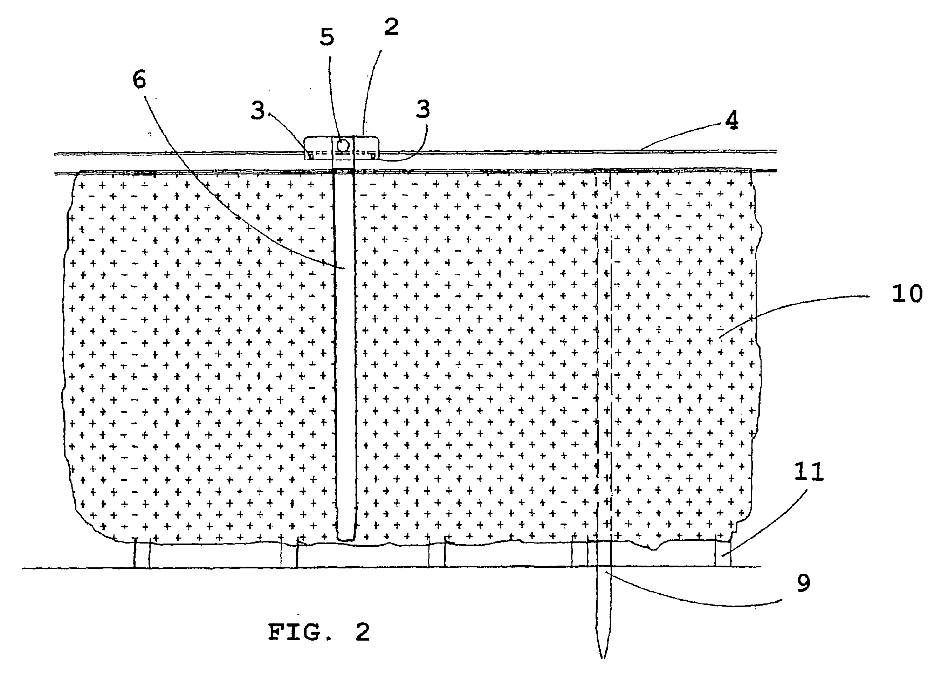

L'invention sera mieux comprise à l'examen de la fig. 1 et la fig. 2 qui représente un dispositif selon l'invention en coupe transversale et de côté.

On reconnaît à la fig. 1 une haie 10 surmontée d'un rail fixe 4 parallèle et disposé au milieu du sommet de la haie. Un moteur électrique 1 permet l'entraînement d'une roue ou galet 5 et le déplacement du chariot transportant un profil abrasif 6 s'étendant de part et d'autre le long de la haie. On notera la présence des galets 3, ainsi que la présence d'un panneau à cellules solaires 2 apte à alimenter le moteur 1 et/ou une batterie rechargeable (non illustrée).

Dans la fig. 2 on distingue, outre les éléments illustrés à la fig. 1, un piquet 9 destiné à la fixation du rail ainsi que les troncs 11 des buissons formant haie.

On comprendra que l'invention peut s'appliquer à d'autres volumes végétaux que des haies. Un buisson ou un groupe de buissons peut ainsi être entretenu en prévoyant le déplacement d'un élément profilé selon la forme souhaitée du volume végétal.

Selon un mode de réalisation ce déplacement peut se produire autour d'un axe, fixe ou non, prévu approximativement au milieu d'un buisson isolé et supportant l'élément profilé, éventuellement coupant ou abrasif, en rotation. Comme dans le cas d'un portique, le moteur, prévu à la base ou au sommet de l'axe, peut être alimenté par le secteur, par des batteries et/ou par des cellules solaires.

On comprendra que l'installation peut se présenter, et être commercialisée, sous la forme de kits prêts à être montés. L'ensemble modulaire comprend par exemple des rails droits et/ou courbés, des piquets de hauteur variable ou réglables un système d'alimentation électrique et un portique motorisé dont le profil est adaptable au volume végétal à entretenir. Les rails peuvent se prolonger par fixation mutuelle de manière connue. Le produit est adaptable à toute configuration végétale.

On comprendra également qu'il peut y avoir plusieurs portiques sur un même rail, indépendants ou solidarisés entre eux.

Selon une autre variante, l'élément mobile empêchant la croissance est une grille ou un grillage. La croissance du volume végétal est empêchée par un mouvement limité ou non en va et vient d'une grille ou d'un grillage enveloppant ou limitant partiellement ledit volume végétal. Ce mouvement peut être continu ou non. Dans ce dernier cas des impulsions sont produites comme indiqué ci-dessus, l'impulsion provoquant toutefois un mouvement de la grille. La grille est formée de préférence d'éléments abrasifs ou coupants. La grille peut être simple ou double, dans ce dernier cas en comportant un second élément de grille indépendant, fixé ou non. Une action de cisaillement peut alors être avantageusement prévue, par exemple, entre une grille fixe (contre-lame) et une grille coupante en mouvement de va et vient, de préférence sous la forme d'impulsions automatiques.

## Revendications

1. Dispositif pour entretien d'une haie (10) comprenant un élément mobile (6) apte à se déplacer en va-et-vient parallèlement au dessus et/ou à côté de la haie,
**caractérisé en ce qu'**il est prévu un moyen pour déplacer l'élément mobile (6) en va-et-vient de manière répétitive et automatique de telle sorte que la croissance de la haie (10) au-delà d'une limite déterminée par la trajectoire dudit élément mobile soit empêchée et qu'aucun déchet ne soit à éliminer.

2. Dispositif selon la revendication 1 dans lequel l'élément (6) mobile a la forme d'un portique.

3. Dispositif selon la revendication 2 dans lequel les arêtes du portique (6) sont tranchantes ou munies d'un élément abrasif.

4. Dispositif selon n'importe laquelle des revendications précédentes dans lequel l'élement mobile (6) se déplace le long d'un ou de plusieurs fils tendus ou le long d'un ou de plusieurs rails (4), le ou les rails étant éventuellement placés au dessus de la haie (10) ou au sol le long et autour de la haie.

5. Dispositif selon n'importe laquelle des revendications précédentes dans lequel le moyen fait se déplacer l'élément mobile (6) en va-et-vient à des intervalles de quelques fois par jour à quelques dizaines de fois par jour.

6. Dispositif selon n'importe laquelle des revendications précédentes dans lequel l'élément mobile (6) est entraîné par un galet (5) et est monté sur un motoréducteur électrique (1).

7. Dispositif selon la revendication précédente dans lequel le moto-réducteur est alimenté par une batterie rechargeable, éventuellement apte à se recharger automatiquement par contact avec une borne de charge fixe placée à une extrémité du rail.

8. Procédé d'entretien d'une haie **caractérisé en ce qu'**il consiste à faire déplacer un élément (6) automatiquement en va et vient, le long d'un rail (4) ou d'un fil, pendant la période de pousse, de manière périodique et permanente ou quasi-permanente, au dessus ou autour de ladite haie (10) de façon à empêcher la croissance de pousses au delà d'une limite prédéterminée par la forme dudit élément.

9. Procédé d'entretien d'un buisson **caractérisé en ce qu'**il consiste à faire déplacer un élément profilé, pendant la période de pousse, de manière périodique et permanente ou quasi-permanente, au dessus ou autour dudit buisson, le déplacement étant effectué autour d'un axe prévu approximativement au milieu dudit buisson et supportant l'élément profilé en rotation.

## Claims

1. Device for the upkeep of a hedge (10) comprising a mobile part (6) that can move in a parallel reciprocating motion above and/or alongside the hedge,
**characterised in that** there is provided a means for moving the mobile part (6) in a reciprocating motion and in a repetitive and automatic way so that the growth of the hedge (10) beyond a limit determined by the path of the mobile part is prevented and that no waste has to be removed.

2. Device according to claim 1 in which the mobile part (6) takes the form of a gantry.

3. Device according to claim 2 in which the edges of the gantry are cutting edges or are equipped with an abrasive element.

4. Device according to any of the preceding claims wherein the mobile part moves along one or several tight wires or along one or several rails (4), the rail(s) being possibly placed above the hedge or on the ground or around the hedge.

5. Device according to any of the preceding claims wherein the means is for moving the mobile part (6) in a reciprocating motion at intervals varying from a few times a day to a few tens of times a day.

6. Device according to any of the preceding claims wherein the mobile part moves by means of a roller (5) and is mounted on an electric gear motor (1).

7. Device according to the preceding claims wherein the electric gear motor is powered by a rechargeable battery, possibly able to recharge automatically by contact with a fixed charger at one end of the rail.

8. Process for the upkeep of a hedge **characterised in that** it consists of displacing an element (6) automatically in reciprocal motion, along a rail (4) or a wire, during the growth period, periodically and continually or essentially continually, above or around said hedge (10) to prevent the growth of shoots beyond a limit predetermined by the shape of that element.

9. Process for the upkeep of a shrub **characterised in that** it consists of displacing a profile element, during the growth period, periodically and continually or essentially continually, above or around said shrub, the displacement being performed around an axis provided approximately in the middle of said shrub and supporting said rotating profile element.

## Patentansprüche

1. Vorrichtung für die Instandhaltung einer Hecke (10), welche ein mobiles Element (6) umfasst, das in der Lage ist, sich parallel oberhalb und / oder neben der Hecke hin und her zu bewegen,
**dadurch gekennzeichnet, dass** vorgesehen ist ein Mittel zur Hin und Her - Verschiebung des mobilen Elements (6) auf wiederholte und automatische Weise, so dass das Wachstum der Hecke (10) über eine durch den Weg des besagten mobilen Elements festgesetzte Grenze hinaus verhindert wird, und keinerlei Abfälle entsorgt werden müssen.

2. Vorrichtung nach dem Anspruch 1, bei der das mobile Element die Form eines Portals aufweist.

3. Vorrichtung nach dem Anspruch 2, bei der die Kanten des Portals (6) scharf schneidend oder mit einem abschleifenden Element versehen sind.

4. Vorrichtung nach irgendeiner der vorangegangenen Ansprüche, bei der das mobile Element (6) sich entlang eines oder mehrerer gespannten Drahtes / Drähte oder entlang einer oder mehrerer Schiene/n (4), wobei die Schiene bzw. die Schienen eventuell oberhalb der Hecke (10) oder am Boden entlang der Hecke oder um sie herum sich befinden.

5. Vorrichtung nach irgendeiner der vorangegangenen Ansprüche, bei der das Mittel das mobile Element (6) dazu veranlasst, sich in Abständen von einigen Malen pro Tag bis zu einigen zig Malen - pro Tag hin und her zu bewegen.

6. Vorrichtung nach irgendeiner der vorangegangenen Ansprüche, bei der das mobile Element (6) durch eine Rolle (5) angetrieben und auf einem Getriebemotor (1) montiert ist.

7. Vorrichtung nach irgendeiner der vorangegangenen Ansprüche, bei der der Getriebemotor mittels einer wieder aufladbaren Batterie versorgt wird, die in der Lage ist sich automatisch wieder aufzuladen durch Kontaktierung einer feststehenden Ladeklemme, die sich an einem Ende der schiene befindet.

8. Verfahren für die Instandhaltung einer Hecke, **dadurch gekennzeichnet, dass** es darin besteht, ein Element (6) zu veranlassen, sich automatisch entlang einer Schiene (4) oder eines Drahtes, während der Wachstumsperiode, auf periodisch und permanente oder quasi-permanente Weise, über oder um die besagte Hecke (10) herum hin und her zu bewegen, so dass das Wachstum über einer durch die Form des besagten Elements vorgegebenen Grenze hinaus zu verhindern.

9. Verfahren für die Instandhaltung eines Busches, **dadurch gekennzeichnet, dass** es darin besteht, ein mit einem Profil versehenes Element (6) zu veranlassen, sich während der Wachstumsperiode, auf periodische oder permanente oder quasi-permanente Weise, über oder um den besagten Busch herum hin und her zu bewegen, wobei die Bewegung um eine Achse erfolgt, die annährend in der Mitte des besagten Busches vorgesehen ist, und die das mit einem Profil versehenen Element rotierend trägt.
